# FASCICULE DE BREVET EUROPEEN

(11) **EP 2 429 900 B1**
(45) Date de publication et mention de la délivrance du brevet: **24.07.2013**
(21) Numéro de dépôt: 10718174.5
(22) Date de dépôt: 07.05.2010
(51) Int. Cl.: B64G 1/10, B64G 1/64

(54) **SYSTEME COMPORTANT UNE SONDE SPATIALE MERE FORMANT UN VEHICULE SPATIAL PORTEUR ET UNE PLURALITE DE SONDES SPATIALES FILLES**
SYSTEM MIT EINER EIN TRÄGERRAUMFAHRZEUG BILDENDEN MUTTERRAUMSONDE UND MEHREREN TOCHTERRAUMSONDEN
SYSTEM COMPRISING A MOTHER SPACE PROBE FORMING A CARRIER SPACE VEHICLE AND A PLURALITY OF DAUGHTER SPACE PROBES

(30) Priorité: 12.05.2009 FR 0953131
(43) Date de publication de la demande: 21.03.2012
(73) Titulaire: Astrium SAS, 75016 Paris (FR)
(72) Inventeur: BALEMBOY, Christophe, F-33700 Merignac (FR); LAINE, Robert, André, 17138 St Xandre (FR); SEMBÉLY, Xavier, F-31400 Toulouse (FR)
(74) Mandataire: Coquel, Jean-Marc
(86) Numéro de dépôt international: PCT/EP2010/056251
(87) Numéro de publication internationale: WO 2010/130651

(56) Documents cités:
- EP-A1- 0 409 711
- EP-A2- 1 013 546
- US-A- 5 765 784

## Description

La présente invention concerne un système comportant une sonde spatiale mère formant véhicule spatial porteur et une pluralité de sondes spatiales filles et l'assemblage de ces sondes spatiales filles sur la sonde spatiale mère formant le véhicule spatial porteur.

Le domaine technique de la présente invention est le domaine spatial et en particulier les missions spatiales emportant plusieurs sondes que l'on doit larguer à partir d'un véhicule spatial porteur unique.

La question du largage de plusieurs satellites à partir d'un seul lanceur est connue et notamment les documents US 5 152 482, US 5 605 308, US 5 199 672, US 5 271 582 concernent des assemblages pour lesquels des lanceurs sont munis de grappes de satellites distribués autour d'un axe longitudinal du lanceur.

Ces assemblages adaptés à un largage rapide de satellites multiples ne sont pas adaptés pour le largage de sondes spatiales du fait que des corrections de trajectoires importantes du véhicule porteur en direction et en rotation angulaire autour de l'axe longitudinal seraient nécessaires pour larguer de telles sondes.

Le document US 5 350 137 pour sa part simplifie l'assemblage de satellites sur un lanceur puisqu'il prévoit des satellites comportant une structure en forme de paraboloïde supportant des équipements auxiliaires, la structure en paraboloïde des satellites permettant de les empiler les un au dessus des autres selon l'axe longitudinal du lanceur sous une coiffe séparable.

Le document US 5 765 784, qui est considéré comme le document de l'art antérieur le plus proche, décrit pour sa part un véhicule spatial porteur sur lequel sont accrochés des grappes de sondes filles.

Les sondes filles ou modules d'atterrissage sont mis en place autour du véhicule porteur et ont en conséquence des directions distinctes de séparation relative ce qui fait varier la symétrie du système au cours des largages.

Il est dans ce cas nécessaire de modifier l'attitude du véhicule spatial porteur avant chaque séparation pour orienter correctement chaque module de descente.

En outre ce type de configuration nécessite une structure complexe au niveau du véhicule porteur et l'ensemble véhicule porteur/sondes est d'un diamètre important. En outre les variations de symétrie du système au fur et à mesure des largages complique la procédure et augmente la quantité de carburant nécessaire et la masse du lanceur.

La présente invention concerne un système permettant notamment de séparer plusieurs modules de descente d'un véhicule spatial ou sonde mère après un voyage interplanétaire avec une attitude adéquate tout en minimisant les manoeuvres à accomplir pour le véhicule spatial entre deux séparation successives et en minimisant le travail de reconception pour deux missions successives ou en cas de changement de configuration.

Dans ce cadre, le véhicule spatial formé par la sonde mère est lui même une sonde adaptée à un voyage entre planètes, à communiquer des données avec la Terre au long de son périple spatial et éventuellement à réguler la température et des paramètres de stockage des sondes filles pendant le voyage spatial.

Plus précisément, la présente invention prévoit un système comportant une sonde mère formant un véhicule spatial porteur et une pluralité de sondes filles alignées selon un axe longitudinal de la sonde mère pour lequel la fixation des sondes filles sur la sonde mère est réalisée au moyen d'une pluralité de segments annulaires supports de sondes munis chacun d'une collerette annulaire de fixation d'une sonde fille.

La sonde mère est une sonde spatiale adaptée à se déplacer d'un astre à un autre et à convoyer les sondes filles.

Selon un mode de réalisation préférentiel, au moins certains des segments annulaires supports de sondes comportent un élément de capot cylindrique externe de protection des sondes filles. Cette configuration facilitant en outre la conception des systèmes de contrôle thermique des sondes filles.

Préférablement, ledit au moins un élément de capot cylindrique est orienté par rapport à la collerette annulaire du segment le portant pour protéger une sonde fille antérieure, la collerette étant orientée pour assurer la fixation d'une sonde fille postérieure.

Plus particulièrement, au moins un segment annulaire support de sonde intermédiaire comporte, côté sonde postérieure un prolongement de l'élément de capot cylindrique de fixation d'un segment annulaire postérieur.

Le système selon l'invention peut en outre être tel qu'un premier segment annulaire est fixé au véhicule spatial porteur et comporte un rebord annulaire de fixation d'un élément de capot cylindrique d'un second segment annulaire support de sonde.

Selon un mode de réalisation de l'invention, un dernier segment annulaire laisse apparente la sonde fille qu'il supporte.

Les collerettes annulaires sont avantageusement de forme générale tronconique, la fixation des sondes filles étant assurée au niveau d'un bord interne annulaire des collerettes.

Dans ce cas, les sondes filles comportent préférablement une coiffe arrière conique s'imbriquant dans la collerette.

De manière avantageuse, les sondes filles sont disposées sur l'avant du véhicule porteur.

Selon l'invention, le largage successif des sondes filles se fait préférablement par éjection des sondes filles vers l'avant au moyen de dispositifs de poussée au niveau de l'interface entre les collerettes annulaires et les sondes filles.

Le largage d'au moins une sonde fille est suivi par le largage de son segment annulaire support.

Selon un aspect particulier de l'invention, au moins certains des segments annulaires portent des radiateurs de contrôle thermique des sondes filles.

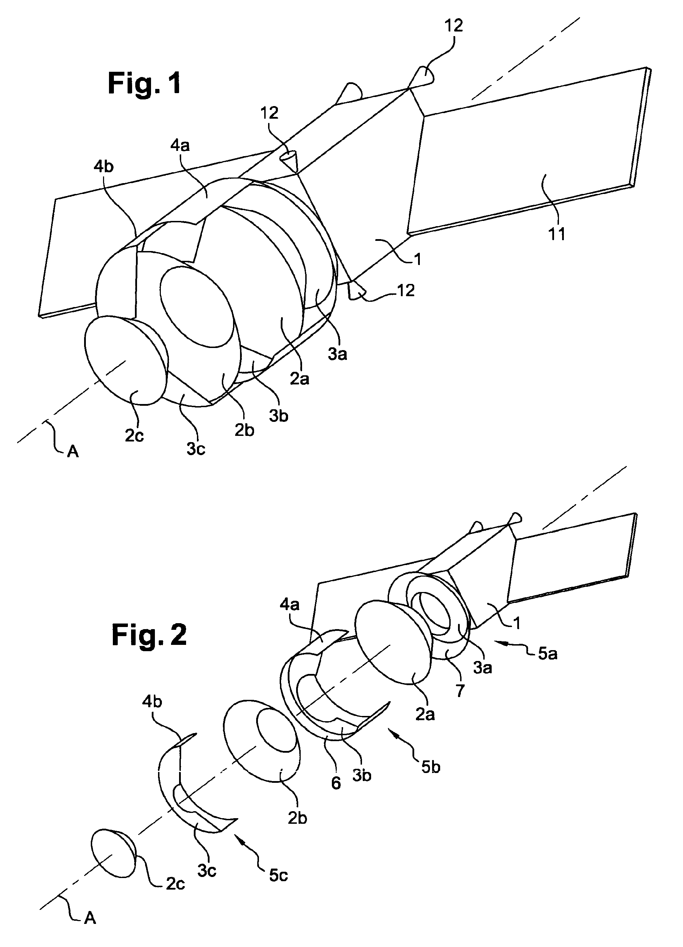

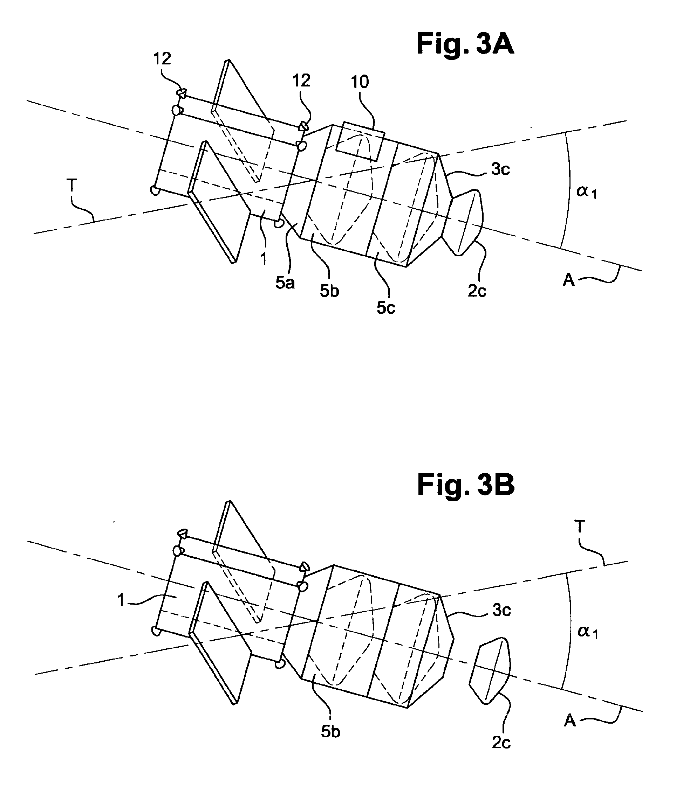

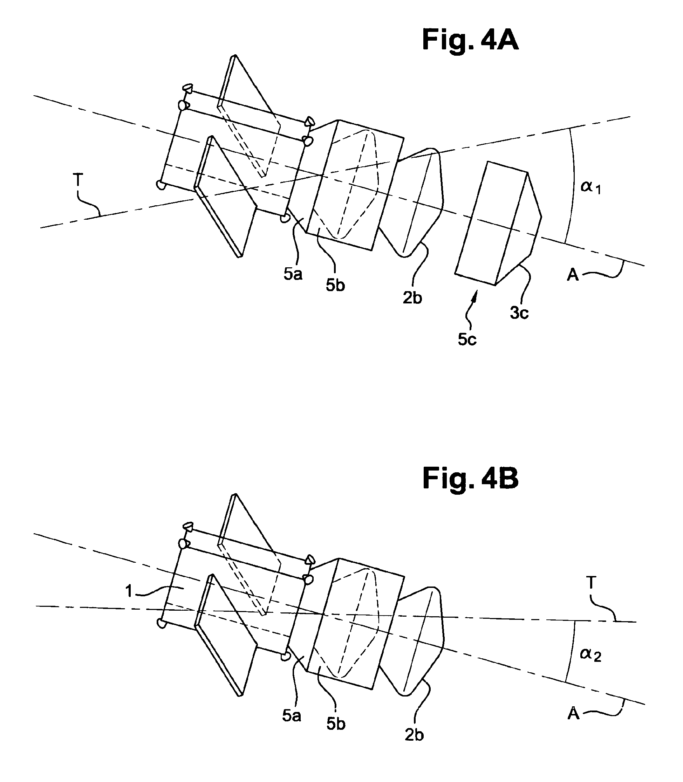

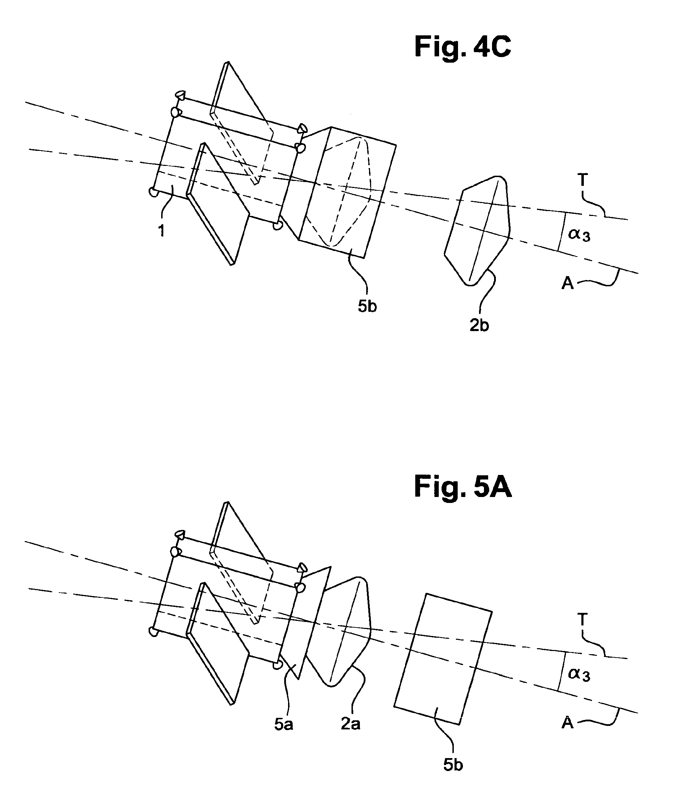

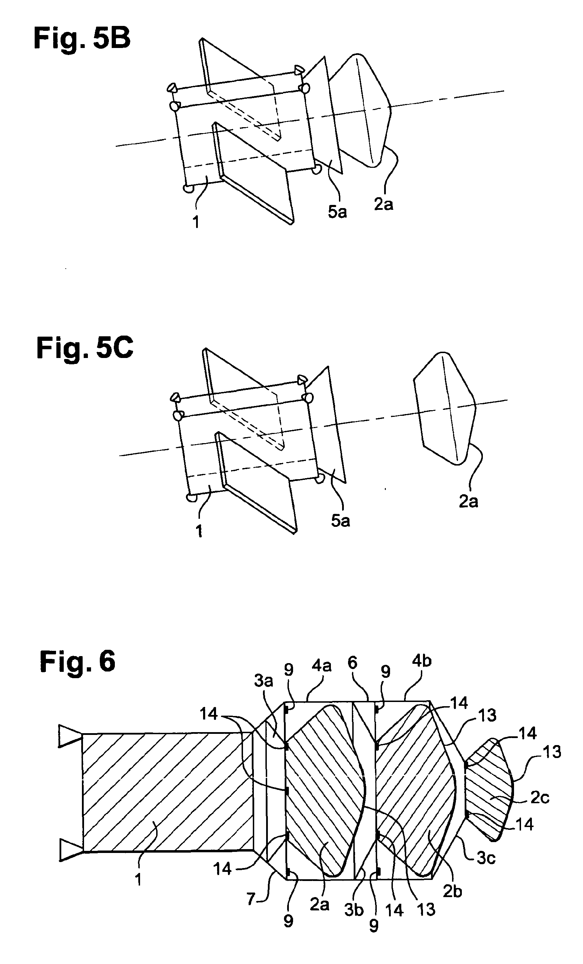

D'autres caractéristiques et avantages de l'invention seront mieux compris à la lecture de la description qui suit d'un exemple de réalisation on limitatif de l'invention en référence aux dessins qui représentent:
En figure 1: une vue schématique en perspective coupe d'un système selon l'invention;
en figure 2: le système de la figure 1 en éclaté;
en figure 3A: une vue en perspective représentant le système de la figure 1 avant le premier largage;
en figure 3B: une vue du système de la figure 1 pendant le premier largage;
en figure 4A: une vue du système de la figure 1 pendant le premier largage de structure intermédiaire;
en figure 4B: une vue du système de la figure 1 positionné en vue du deuxième largage;
en figure 4C: une vue du système de la figure 1 au cours du deuxième largage;
en figure 5A: une vue du système de la figure 1 au cours du deuxième largage de structure intermédiaire;
en figure 5B: une vue du système de la figure 1 positionné en vue du troisième largage;
en figure 5C: une vue du système de la figure 1 pendant le troisième largage;
en figure 6: une vue schématique du système de la figure 1 en coupe longitudinale.

La présente invention s'applique par exemple aux missions spatiales pour lesquelles un module de transport spatial tel qu'une sonde spatiale emporte plusieurs modules atterrisseurs vers une planète à étudier, mais aussi les missions spatiales emportant plusieurs sondes filles destinées à orbiter autour d'un corps céleste.

Une telle sonde n'est pas comparable à un simple lanceur dont la fonction est de mettre en orbite un ou plusieurs satellites et dont la durée de fonctionnement est limitée à quelques minutes, au maximum quelques heures après le lancement.

Les figures 1 et 2 présentent le système de l'invention en globalité.

Le système comporte un véhicule spatial porteur 1 constitué par une sonde spatiale mère pourvue de panneaux solaires 11, de systèmes électroniques de guidage, de communication, de systèmes de régulation adaptés à maintenir la sonde en fonction pendant les mois ou années de voyage spatial.

Pour son pilotage, la sonde mère est en outre équipée de tuyères de réglage d'attitude et de propulsion 12.

Sur la sonde mère sont disposée une pluralité de sondes filles 2a, 2b, 2c qui sont selon l'invention alignées selon un axe longitudinal A de la sonde mère constituant un véhicule porteur.

Dans l'optique d'un montage compact et simple, la fixation des sondes filles sur le véhicule porteur formé par la sonde mère est réalisée au moyen d'une pluralité de segments annulaires 5a, 5b, 5c supports de sondes munis chacun d'une collerette annulaire 3a, 3b, 3c de fixation d'une sonde.

Le système de l'invention est ainsi conçu de telle sorte que le centre de gravité de l'ensemble est proche de l'axe d'alignement des différentes sondes ce qui réduit la perturbation d'attitude de l'ensemble lors des largages de sondes successifs.

De plus, même dans le cas de sondes de masses différentes, l'ensemble reste facile à équilibrer.

Un ordre d'idée de vitesse que l'on doit impulser à une sonde est de l'ordre de 11,5 km/s ce qui est beaucoup plus important que la vitesse que l'on donne à un satellite. Pour un satellite et une orbite basse par exemple à 400 km de la Terre, la vitesse est de l'ordre de 7,5 km/s.

Comme l'énergie varie au carré de la vitesse, une sonde est beaucoup plus sensible en terme de masse par rapport à un satellite.

La figure 2 représente le système en éclaté selon l'axe A où l'on voit que les sondes filles sont empilées en alignement en partant d'une sonde fille antérieure côté véhicule porteur 1, vers des sondes filles postérieures en s'éloignant du véhicule porteur. Par convention on appellera avant du véhicule porteur la partie qui se trouve vers l'avant de la trajectoire lors du largage des sondes filles.

Le principe de l'invention est ainsi d'empiler des modules élémentaires comportant les sondes filles et les segments annulaires le long d'un axe du véhicule porteur constitué par la sonde mère.

Les sondes filles peuvent notamment être des modules de descente destinés à se poser sur une planète à observer alors que la sonde mère restera en orbite autour de ladite planète.

Elles sont disposées sur l'avant du véhicule porteur 1 et sont larguées successivement l'une après l'autre dans une direction quasiment fixe, avec séparation intermédiaire de la structure porteuse d'une sonde postérieure avant la séparation de la sonde ou module antérieur.

L'avant du véhicule est défini par rapport à l'orientation du véhicule dans la phase de largage des sondes filles.

Les figures 3A à 5C illustrent une séquence de séparations successives de l'ensemble des sondes filles de la sonde mère constituant le module porteur.

L'invention permet d'envisager une séquence de séparations successives avec un minimum de changement d'attitude du véhicule porteur ce qui réduit les besoins en propergols pour la conduite de la séquence de séparations.

En particulier, les orientations visées lors des phases correspondant aux largage des sondes restent proches et nécessitent peu de modifications de trajectoire du véhicule spatial porteur.

La figure 3A correspond au positionnement du système par rapport à une trajectoire T permettant le largage de la première sonde.

Avec les tuyères 12 on oriente le système autour de son centre de gravité par rapport à la trajectoire T pour que, lors de l'impulsion de largage de la sonde, cette dernière se place sur la trajectoire voulue avec l'attitude voulue, par exemple une trajectoire de rentrée dans l'atmosphère du corps céleste sur lequel doit se poser la sonde.

Dans la configuration de largage de la sonde 2c, l'angle que fait l'axe A de symétrie de la sonde avec la trajectoire est repéré par la valeur α1.

La figure 3B représente le système lors du largage de la sonde 2c.

Une fois cette sonde larguée, le système poursuit sa route et se prépare au largage de la deuxième sonde.

Pour ce faire, en figure 4A, le segment 5c comportant la collerette 3c de fixation de la première sonde est largué pour dévoiler la deuxième sonde 2b.

En figure 4B, le véhicule effectue la correction d'attitude nécessaire pour pouvoir larguer la deuxième sonde selon la trajectoire choisie, l'angle fait entre l'axe A de la sonde et la trajectoire T est repéré α2 et en figure 4C on procède au largage de la deuxième sonde.

Selon la figure 5A le segment 5b comportant la collerette de fixation de la deuxième sonde est largué pour dévoiler la troisième sonde 2a.

Cette dernière sonde est larguée comme représenté en figure 5C après un nouvel alignement éventuel du module par rapport à sa trajectoire comme représenté en figure 5B.

Du fait du principe de l'invention très peu de manoeuvres sont nécessaires pour larguer les sondes filles sur les trajectoires que l'on souhaite leur donner, un pointage du module en tangage par rapport à sa trajectoire propre étant pratiquement la seule opération à réaliser pour déposer plusieurs sondes sur un corps céleste.

En outre, la configuration à symétrie de révolution du système de l'invention pour lequel toutes les sondes sont sur un seul axe simplifie la gestion de l'attitude de l'ensemble en fonction des contraintes de contrôle thermique durant la croisière Terre/Corps céleste.

Comme représenté sur les figures et notamment en figure 2, au moins certains des segments annulaires supports de sondes comportent un élément de capot cylindrique externe 4a, 4b de protection des sondes.

Ces éléments de capots cylindriques 4a, 4b sont orientés par rapport aux collerettes annulaires 3b, 3c du segment 5b, 5c les portant pour protéger une sonde antérieure 2a, 2b, les collerettes étant orientées pour assurer la fixation d'une sonde postérieure 2b, 2c.

Les éléments de capots cylindriques font écran au rayonnement solaire et le moyennent. Ceci protège les sondes qui sont à l'intérieur des capots et diminue leurs besoins en contrôle thermique.

Par contre selon l'exemple, un dernier segment annulaire 5c laisse apparente la sonde qu'il supporte, cette dernière pouvant le cas échéant être protégée par un capot spécifique ou une isolation à couches multiples classique.

Ainsi, à l'exception selon l'exemple de la sonde la plus éloignée du module, les sondes sont à l'intérieur d'une structure et non directement en vue de l'espace.

De ce fait, leur environnement thermique radiatif est mieux maîtrisé et leur contrôle thermique individuel en est simplifié.

Ce contrôle thermique peut en particulier être confié à la sonde mère pendant la durée du voyage, les sondes filles restant inactives jusqu'à leur largage.

Pour cela, la sonde mère équipée de panneaux solaires peut comporter des moyens adaptés à assurer un contrôle thermique d'au moins certaines des sondes filles et en outre comporter des moyens de charge ou de maintien en charge des batteries des sondes filles.

Pour les sondes protégées par les capots, si le contrôle thermique nécessite la mise en place de radiateurs 10, ceux-ci pourront être sur les structures, par exemple sur la paroi externe des capots cylindriques comme représenté sur le capot 5b de la figure 3A et donc n'interféreront pas avec la protection thermique de rentrée atmosphérique des sondes.

Outre le capot, au moins un segment annulaire support de sonde intermédiaire comporte, côté sonde postérieure un prolongement 6 de l'élément de capot cylindrique de fixation d'un segment annulaire postérieur.

Ce prolongement 6 permet d'éloigner la zone de jonction d'un capot postérieur avec un segment antérieur par rapport à la collerette de sorte que lors du largage du segment, on ne risque pas d'abîmer la collerette du segment antérieur.

De même pour constituer la jonction entre le module 1 et le premier capot 4a du second segment annulaire support de sonde, un premier segment annulaire est fixé au véhicule spatial porteur et comporte un rebord annulaire 7 de fixation de cet élément de capot cylindrique 4a.

Les collerettes annulaires 3a, 3b, 3c sont de forme générale tronconique, la fixation des sondes étant assurée au niveau d'un bord interne annulaire des collerettes, les sondes comportant selon l'exemple une coiffe arrière 8 conique s'imbriquant dans la collerette.

La figure 6 vue en coupe permet de bien voir la compacité du système pour lequel les collerettes 3b et 3c notamment sont adaptées au vu de la forme des boucliers 13 des sondes.

Sur cette vue ont été en outre schématisé des dispositifs de poussée 14 au niveau de l'interface entre les collerettes annulaires et les sondes pour l'éjection des sondes et des dispositifs de poussée 9 pour larguer les segments portant les capots.

Le système de l'invention est adapté à un voyage de longue durée pour lequel les sondes filles sont portées par la sonde mère.

## Revendications

1. Système comportant une sonde mère formant un véhicule spatial porteur (1) et une pluralité de sondes filles (2a, 2b, 2c) alignées selon un axe longitudinal (A) de la sonde mère pour lequel la fixation des sondes filles sur la sonde mère est réalisée au moyen d'une pluralité de segments annulaires (5a, 5b, 5c) supports de sondes munis chacun d'une collerette annulaire (3a, 3b, 3c) de fixation d'une sonde fille.

2. Système selon la revendication 1 pour lequel au moins certains des segments annulaires supports de sondes comportent un élément de capot cylindrique externe (4a, 4b) de protection des sondes filles.

3. Système selon la revendication 2 pour lequel au moins un élément de capot cylindrique (4a) est orienté par rapport à la collerette annulaire (3b) du segment (5b) le portant pour protéger une sonde fille antérieure (2a), la collerette étant orientée pour assurer la fixation d'une sonde fille postérieure (2b).

4. Système selon la revendication 3 pour lequel au moins un segment annulaire support de sonde intermédiaire comporte, côté sonde postérieure un prolongement (6) de l'élément de capot cylindrique de fixation d'un segment annulaire postérieur.

5. Système selon l'une quelconque des revendications 2 à 4 pour lequel un premier segment annulaire est fixé au véhicule spatial porteur et comporte un rebord annulaire (7) de fixation d'un élément de capot cylindrique d'un second segment annulaire support de sonde.

6. Système selon l'une quelconque des revendications 2 à 5 pour lequel un dernier segment annulaire (5c) laisse apparente la sonde qu'il supporte.

7. Système selon l'une quelconque des revendications précédentes pour lequel les collerettes annulaires (3a, 3b, 3c) sont de forme générale tronconique, la fixation des sondes filles étant assurée au niveau d'un bord interne annulaire des collerettes.

8. Système selon la revendication 7 pour lequel les sondes filles comportent une coiffe arrière (8) conique s'imbriquant dans la collerette.

9. Système selon l'une quelconque des revendications précédentes pour lequel les sondes filles sont disposées sur l'avant du véhicule porteur (1).

10. Système selon l'une quelconque des revendications précédentes pour lequel le largage successif des sondes filles se fait par éjection des sondes filles vers l'avant au moyen de dispositifs de poussée (14) au niveau de l'interface entre les collerettes annulaires et les sondes filles.

11. Système selon l'une quelconque des revendications précédentes pour lequel le largage d'au moins une sonde fille est suivi par le largage de son segment annulaire support.

12. Système selon l'une quelconque des revendications précédentes pour lequel au moins certains des segments annulaires portent des radiateurs (10) de contrôle thermique des sondes filles.

13. Système selon l'une quelconque des revendications précédentes **caractérisé en ce que** la sonde mère comporte des moyens adaptés à assurer un contrôle thermique d'au moins certaines des sondes filles.

## Patentansprüche

1. System, das eine ein Trägerraumfahrzeug (1) bildende Muttersonde und eine Vielzahl von Tochtersonden (2a, 2b, 2c) aufweist, die gemäß einer Längsachse (A) der Muttersonde fluchtend angeordnet sind, wobei die Befestigung der Tochtersonden an der Muttersonde mittels einer Vielzahl von ringförmigen Sondenstützsegmenten (5a, 5b, 5c) durchgeführt wird, die je mit einem ringförmigen Befestigungskragen (3a, 3b, 3c) einer Tochtersonde versehen sind.

2. System nach Anspruch 1, wobei mindestens bestimmte der ringförmigen Sondenstützsegmente ein äußeres zylindrisches Kappenelement (4a, 4b) zum Schutz der Tochtersonden aufweisen.

3. System nach Anspruch 2, wobei mindestens ein zylindrisches Kappenelement (4a) bezüglich des ringförmigen Kragens (3b) des es tragenden Segments (5b) ausgerichtet ist, um eine vorhergehenden Tochtersonde (2a) zu schützen, wobei der Kragen ausgerichtet ist, um die Befestigung einer nachfolgenden Tochtersonde (2b) zu gewährleisten.

4. System nach Anspruch 3, wobei mindestens ein ringförmiges Zwischensondenstützsegment auf der Seite der nachfolgenden Sonde eine Verlängerung (6) des zylindrischen Kappenelements zur Befestigung eines nachfolgenden ringförmigen Segments aufweist.

5. System nach einem der Ansprüche 2 bis 4, wobei ein erstes ringförmiges Segment am Trägerraumfahrzeug befestigt ist und eine ringförmige Randleiste (7) zur Befestigung eines zylindrischen Kappenelements eines zweiten ringförmigen Sondenstützsegments aufweist.

6. System nach einem der Ansprüche 2 bis 5, wobei ein letztes ringförmiges Segment (5c) die Sonde sichtbar lässt, die es stützt.

7. System nach einem der vorhergehenden Ansprüche, wobei die ringförmigen Kragen (3a, 3b, 3c) allgemein kegelstumpfförmig sind, wobei die Befestigung der Tochtersonden im Bereich eines ringförmigen Innenrands der Kragen gewährleistet wird.

8. System nach Anspruch 7, wobei die Tochtersonden eine kegelförmige hintere Abdeckung (8) aufweisen, die sich in den Kragen verkeilt.

9. System nach einem der vorhergehenden Ansprüche, wobei die Tochtersonden an der Vorderseite des Trägerfahrzeugs (1) angeordnet sind.

10. System nach einem der vorhergehenden Ansprüche, wobei das aufeinanderfolgende Abwerfen der Tochtersonden durch Auswurf der Tochtersonden nach vorne mittels Schubvorrichtungen (14) im Bereich der Schnittstelle zwischen den ringförmigen Kragen und den Tochtersonden erfolgt.

11. System nach einem der vorhergehenden Ansprüche, wobei auf den Abwurf mindestens einer Tochtersonde der Abwurf ihres ringförmigen Stützsegments folgt.

12. System nach einem der vorhergehenden Ansprüche, wobei mindestens bestimmte der ringförmigen Segmente Radiatoren (10) zur Wärmeregulierung der Tochtersonden aufweisen.

13. System nach einem der vorhergehenden Ansprüche, **dadurch gekennzeichnet, dass** die Muttersonde Einrichtungen aufweist, die geeignet sind, um eine Wärmeregulierung mindestens bestimmter der Tochtersonden zu gewährleisten.

## Claims

1. System comprising a mother probe forming a carrier space vehicle (1) and a plurality of daughter probes (2a, 2b, 2c) aligned along a longitudinal axis (A) of the mother probe for which the attachment of the daughter probes to the mother probe is achieved by means of a plurality of annular segments (5a, 5b, 5c) which are supporting probes each being furnished with an annular collar (3a, 3b, 3c) for attachment of a daughter probe.

2. System according to Claim 1, for which at least certain of the annular segments supporting probes comprise an external cylindrical cap element (4a, 4b) for protection of the daughter probes.

3. System according to Claim 2, for which at least one cylindrical cap element (4a) is oriented relative to the annular collar (3b) of the segment (5b) supporting it in order to protect an anterior daughter probe (2a), the collar being oriented to ensure the attachment of a posterior daughter probe (2b).

4. System according to Claim 3, for which at least one annular segment supporting an intermediate probe comprises, on the side of the posterior probe, an extension (6) of the cylindrical cap element of attachment of a posterior annular segment.

5. System according to any one of Claims 2 to 4, for which a first annular segment is attached to the carrier space vehicle and comprises an annular rim (7) for attachment of a cylindrical cap element of a second annular segment supporting a probe.

6. System according to any one of Claims 2 to 5, for which a last annular segment (5c) leaves exposed to view the probe that it supports.

7. System according to any one of the preceding claims, for which the annular collars (3a, 3b, 3c) are of generally frustoconical shape, the attachment of the daughter probes being provided at an annular internal edge of the collars.

8. System according to Claim 7, for which the daughter probes comprise a conical rear covering (8) nesting in the collar.

9. System according to any one of the preceding claims, for which the daughter probes are placed on the front of the carrier vehicle (1).

10. System according to any one of the preceding claims, for which the successive undocking of the daughter probes is carried out by forward ejection of the daughter probes by means of thrust devices (14) at the interface between the annular collars and the daughter probes.

11. System according to any one of the preceding claims, for which the undocking of at least one daughter probe is followed by the undocking of its supporting annular segment.

12. System according to any one of the preceding claims, for which at least certain of the annular segments support radiators (10) for the thermal control of the daughter probes.

13. System according to any one of the preceding claims, **characterized in that** the mother probe comprises means suitable for carrying out a thermal control of at least certain of the daughter probes.
